# EUROPEAN PATENT SPECIFICATION

(11) **EP 4 530 170 B1**
(45) Date of publication and mention of the grant of the patent: **21.01.2026**
(21) Application number: 24170499.8
(22) Date of filing: 16.04.2024
(51) Int. Cl.: B62J 27/20, B62K 5/027, B62K 5/05

(54) **STRADDLED VEHICLE**
GRÄTSCHSITZFAHRZEUG
VÉHICULE À SELLE

(30) Priority: 28.09.2023 JP 2023167380; 20.10.2023 JP 2023180927
(43) Date of publication of application: 02.04.2025
(73) Proprietor: Yamaha Hatsudoki Kabushiki Kaisha, Shizuoka-ken 438-8501, (JP)
(72) Inventor: Kihara, Hirotaka, Iwata-shi, Shizuoka-ken, 438-8501 (JP); Fujii, Naoya, Iwata-shi, Shizuoka-ken, 438-8501 (JP)
(74) Representative: Grünecker Patent- und Rechtsanwälte PartG mbB

(56) References cited:
- US-A1- 2017 021 891
- US-A1- 2021 284 268
- US-B2- 7 997 613

## Description

The present invention relates to a straddled vehicle according to the preamble of independent claim 1. Such a straddled vehicle can be taken from the prior art document US 2017/021891 A1.

Straddled vehicles that riders straddle to ride are known in the art. Examples of such straddled vehicles known in the art include: a motorcycle including a front wheel and a rear wheel (see, for example, JP 2011-117339 A); and a leaning vehicle including two front wheels and a rear wheel (see, for example, JP 2017-171275 A).

It is the object of the present invention to provide a straddled vehicle being able to absorb and/or reduce kinetic energy when a rider is separated from the vehicle upon frontal collision so as to reduce an impact on the rider. According to the present invention said object is solved by a straddled vehicle having the features of independent claim 1. Preferred embodiments are laid down in the dependent claims.

A straddled vehicle disclosed herein includes: a body frame including a head pipe; a front wheel supported by the body frame; a rear wheel supported by the body frame; a seat disposed behind the head pipe and supported by the body frame; a first acceleration sensor to detect an acceleration; and an airbag that expands in accordance with the acceleration detected by the first acceleration sensor.

When the straddled vehicle undergoes a high acceleration owing to a frontal collision, the airbag expands in accordance with the acceleration detected by the first acceleration sensor. Because the airbag absorbs an impact resulting from the frontal collision, this arrangement is expected to enhance safety of the straddled vehicle.

The straddled vehicle may further include a second acceleration sensor to detect an acceleration. One of the first acceleration sensor and the second acceleration sensor may be disposed forward of a center of gravity of the straddled vehicle. The other one of the first acceleration sensor and the second acceleration sensor may be disposed rearward of the center of gravity of the straddled vehicle.

When an impact force has applied laterally to the straddled vehicle, this arrangement makes it possible to relatively easily determine whether the impact force has applied to the center of gravity or to a location deviated from the center of gravity. Accordingly, this arrangement makes it possible to grasp a situation at the time of an accident.

The first acceleration sensor and/or the second acceleration sensor may be disposed above the center of gravity of the straddled vehicle.

When relatively large vehicle component(s) is/are disposed below the center of gravity, this arrangement makes it possible to prevent the vehicle component(s) from interfering with the first acceleration sensor and/or the second acceleration sensor. Accordingly, this arrangement is able to increase the flexibility of location(s) of the vehicle component(s).

One of the first acceleration sensor and the second acceleration sensor may be disposed leftward of the center of gravity of the straddled vehicle. The other one of the first acceleration sensor and the second acceleration sensor may be disposed rightward of the center of gravity of the straddled vehicle.

When the straddled vehicle yaws at the time of a collision, this arrangement makes it possible to relatively accurately detect a collision acceleration in accordance with detection results obtained by the first acceleration sensor and the second acceleration sensor.

The first acceleration sensor and/or the second acceleration sensor may be disposed below the center of gravity of the straddled vehicle.

This arrangement makes it possible to more accurately detect a collision acceleration from an early stage to a final stage of a collision.

The front wheel may be a left front wheel disposed leftward of the head pipe. The straddled vehicle may further include a right front wheel disposed rightward of the head pipe. The rear wheel may be disposed on a vehicle central line in a plan view of the straddled vehicle. The first acceleration sensor and/or the second acceleration sensor may be disposed inside a virtual triangle whose apexes are defined by a center of the left front wheel, a center of the right front wheel, and a center of the rear wheel in the plan view of the straddled vehicle.

Accordingly, if the center of gravity shifts forward on the straddled vehicle at the time of a collision, acceleration(s) at the time of the collision would be detected at location(s) close to the center of gravity, and thus the influence of disturbances would be reduced. Consequently, this arrangement makes it possible to successfully detect collision-induced acceleration(s).

### Advantageous Effects of Invention

Various embodiments of the present invention are expected to enhance security of straddled vehicles against frontal collisions.

### BRIEF DESCRIPTION OF DRAWINGS

FIG. 1 is a left side view of a motorcycle according to a first not claimed embodiment for explaining the general teaching.
FIG. 2 is a font view of the motorcycle according to the first not claimed embodiment.
FIG. 3 is a plan view of the motorcycle according to the first not claimed embodiment,
FIGS. 4(a) and 4(b) are diagrams each schematically illustrating an impact force applied laterally to the motorcycle.
FIGS. 5(a) and 5(b) are diagrams each illustrating yawing-induced right-left accelerations detected by a first acceleration sensor and a second acceleration sensor.
FIGS. 6(a) and 6(b) are diagrams each illustrating yawing-induced front-rear accelerations detected by the first acceleration sensor and the second acceleration sensor.
FIG. 7 is a left side view of a motorcycle according to a second not claimed embodiment for explaining the general teaching.
FIG. 8 is a front view of the motorcycle according to the second not claimed embodiment.
FIG. 9 is a plan view of the motorcycle according to the second not claimed embodiment.
FIG. 10 is a diagram illustrating pitching-induced front-rear accelerations detected by an acceleration sensor disposed above a center of gravity and another acceleration sensor disposed at the same height as the center of gravity.
FIG. 11 is a left side view of main components of a leaning vehicle according to a third embodiment according to the teaching of the independent claim.
FIG. 12 is a front view of the main components of the leaning vehicle according to the third embodiment.
FIG. 13 is a plan view of the main components of the leaning vehicle according to the third embodiment.
FIG. 14 is a front view of the leaning vehicle according to the third embodiment when the leaning vehicle is inclined leftward.
FIG. 15 is a left side view of main components of a leaning vehicle according to a fourth not claimed embodiment for explaining the general teaching.
FIG. 16 is a front view of the main components of the leaning vehicle according to the fourth not claimed embodiment.
FIG. 17 is a plan view of the main components of the leaning vehicle according to the fourth not claimed embodiment.

### DESCRIPTION OF EMBODIMENTS

Embodiments of straddled vehicles according to the present teaching will be described below with reference to the drawings.

### First not claimed Embodiment

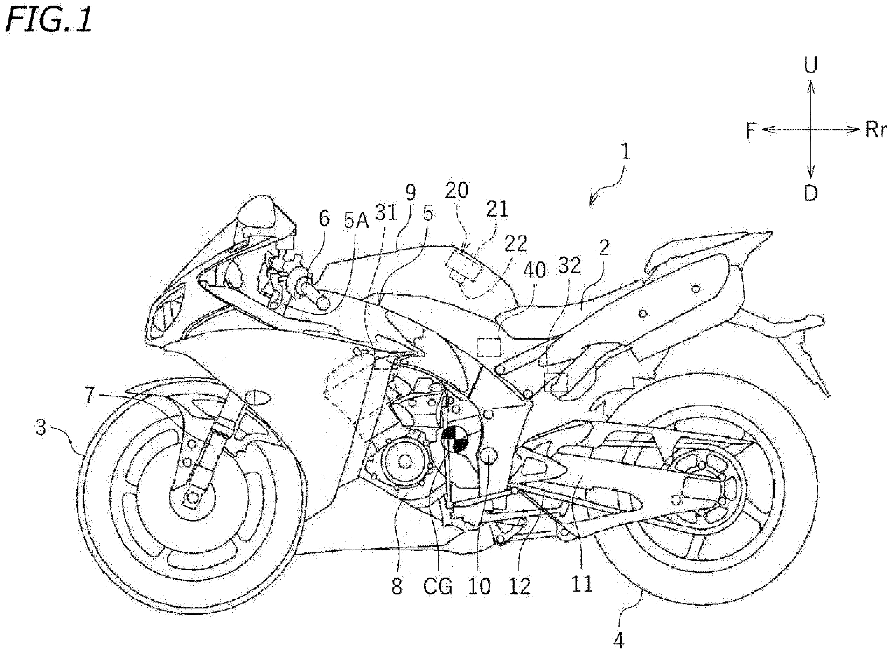

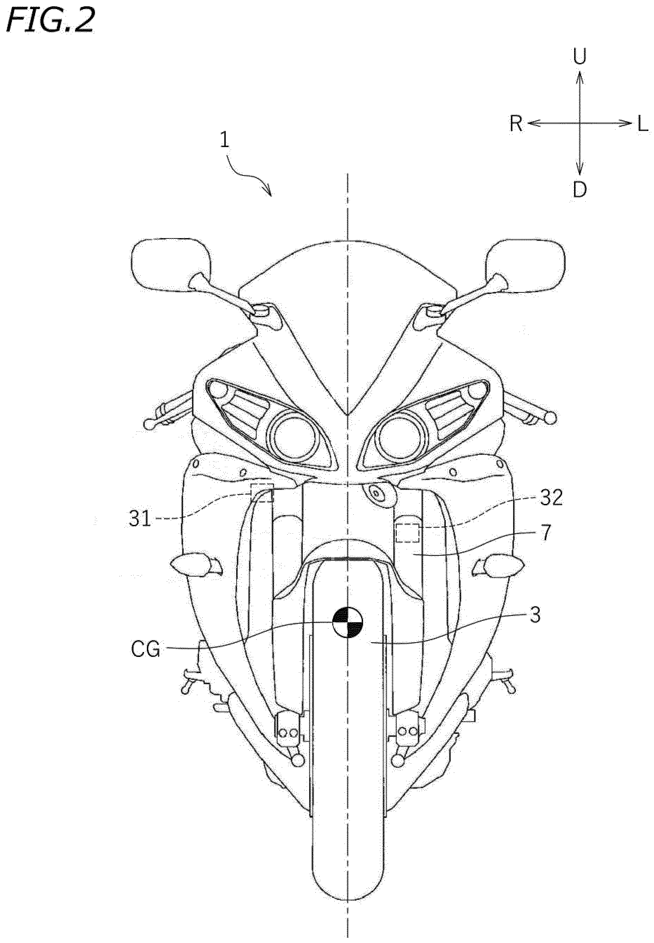

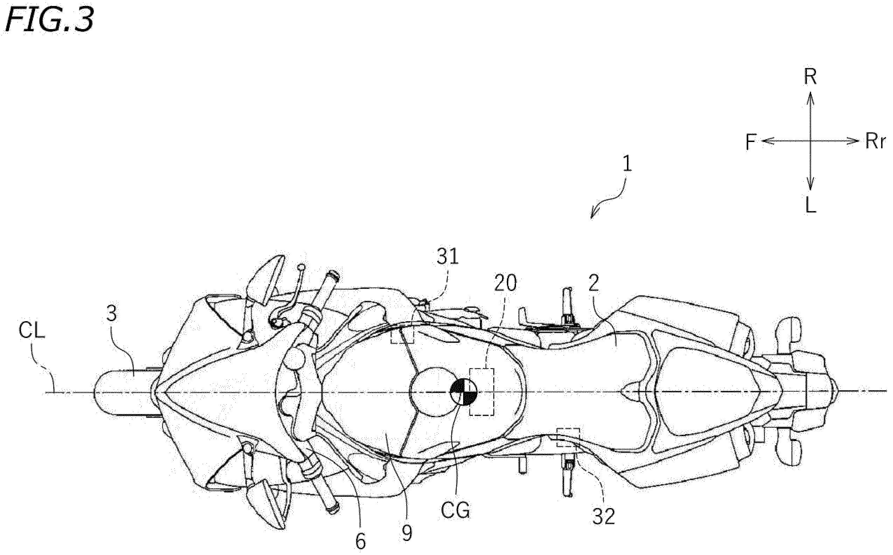

As illustrated in FIG. 1, a straddled vehicle according to a first not claimed embodiment for explaining the general teaching is a motorcycle 1 including a front wheel 3 and a rear wheel 4. FIG. 1 is a left side view of the motorcycle 1. FIG. 2 is a front view of the motorcycle 1. FIG. 3 is a plan view of the motorcycle 1.

The motorcycle 1 includes a seat 2 on which a rider sits. The following description is based on the assumption that unless otherwise specified, the terms "front", "rear", "left", "right", "up", and "down" respectively refer to front, rear, left, right, up, and down with respect to a virtual rider sitting on the seat 2 when the motorcycle 1 with no rider or luggage thereon is stationary in an upright position on a horizontal plane. The reference signs "F", "Rr", "L", "R", "U", and "D" in the drawings respectively represent front, rear, left, right, up, and down. Unless otherwise specified, the term "center of gravity of the motorcycle 1" refers to a center of gravity of the motorcycle 1 when the motorcycle 1 with no rider or luggage thereon is stationary in an upright position on a horizontal plane.

As illustrated in FIG. 1, the motorcycle 1 includes a body frame 5 including a head pipe 5A. A steering shaft (not illustrated) is inserted into the head pipe 5A. The steering shaft is supported by the head pipe 5A so as to be rotatable rightward and leftward. An upper portion of the steering shaft has a handlebar 6 secured thereto. A lower portion of the steering shaft has a front fork 7 secured thereto. The front wheel 3 is rotatably supported by the front fork 7. The front wheel 3 is indirectly supported by the body frame 5 through the front fork 7 and/or other component(s).

The body frame 5 supports an internal combustion engine 8 (hereinafter referred to as an "engine 8") serving as a driving source for travel of the motorcycle 1. A fuel tank 9 is disposed behind the head pipe 5A and in front of the seat 2. The seat 2 and the fuel tank 9 are supported by the body frame 5.

The body frame 5 is connected with a rear arm 11 through a pivot shaft 10. The rear arm 11 is swingable relative to the body frame 5 around the pivot shaft 10. The rear wheel 4 is rotatably supported by a rear end portion of the rear arm 11. The rear wheel 4 is indirectly supported by the body frame 5 through the rear arm 11. The engine 8 and the rear wheel 4 are connected to each other through a chain 12 such that power is transmittable between the engine 8 and the rear wheel 4. The chain 12 is a power transmission member through which power generated by the engine 8 is transmitted to the rear wheel 4. The power transmission member, however, is not limited to the chain 12. The power transmission member may be a transmission belt, a drive shaft, or any other suitable power transmission member.

The motorcycle 1 includes an airbag device 20. The airbag device 20 is disposed in front of the seat 2. The airbag device 20, however, may be located at an any other suitable position. The airbag device 20 includes an airbag 21 and an inflator 22 to generate inflation gas to be supplied to the airbag 21. Upon supply of the inflation gas to the airbag 21, the airbag 21 inflates outward. Outward inflation of the airbag 21 will hereinafter be referred to as "expansion of the airbag 21".

Upon receiving an impact resulting from a frontal collision, the motorcycle 1 undergoes a high acceleration. When the motorcycle 1 undergoes a high acceleration, the inflator 22 generates inflation gas, which expands the airbag 21. The motorcycle 1 includes a first acceleration sensor 31 and a second acceleration sensor 32 to detect accelerations. The airbag device 20 is configured to expand the airbag 21 in accordance with acceleration(s) detected by the first acceleration sensor 31 and/or the second acceleration sensor 32. In consideration of, for example, a driving condition, the airbag device 20 expands the airbag 21 when the acceleration(s) detected by the first acceleration sensor 31 and/or the second acceleration sensor 32 is/are equal to or greater than a predetermined threshold value. The first acceleration sensor 31 and the second acceleration sensor 32 may be directly secured to the body frame 5 or may be indirectly secured to the body frame 5 through other member(s).

As illustrated in FIGS. 1 and 3, the first acceleration sensor 31 is disposed forward of a center of gravity CG of the motorcycle 1, and the second acceleration sensor 32 is disposed rearward of the center of gravity CG of the motorcycle 1. As illustrated in FIGS. 2 and 3, the first acceleration sensor 31 is disposed rightward of the center of gravity CG of the motorcycle 1, and the second acceleration sensor 32 is disposed leftward of the center of gravity CG of the motorcycle 1. As illustrated in FIGS. 1 and 2, the first acceleration sensor 31 and the second acceleration sensor 32 are disposed above the center of gravity CG of the motorcycle 1.

The motorcycle 1 includes a controller 40 communicably connected to the first acceleration sensor 31, the second acceleration sensor 32, and the inflator 22 of the airbag device 20. The controller 40 includes a microcomputer. The controller 40 activates the inflator 22 in accordance with detection result(s) obtained by the first acceleration sensor 31 and/or the second acceleration sensor 32. The controller 40 causes the airbag 21 to expand, for example, when an acceleration detected by the first acceleration sensor 31 or an acceleration detected by the second acceleration sensor 32 is equal to or greater than a threshold value. The motorcycle 1 may include a memory to store detection results obtained by the first acceleration sensor 31 and the second acceleration sensor 32. The memory may be separate from the controller 40. The controller 40 may also function as the memory.

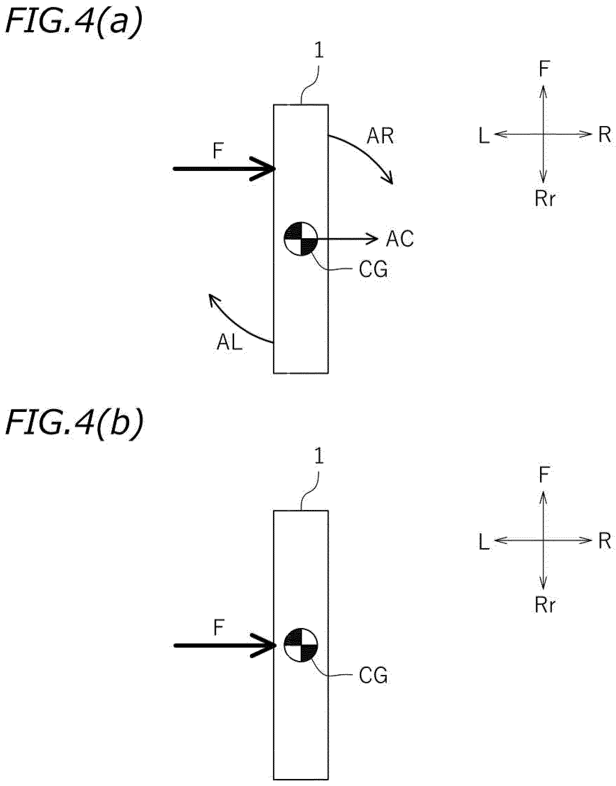

To correctly detect and record right-left accelerations of the motorcycle 1 at the time of a collision is important in grasping a situation at the time of an accident. Another vehicle may collide with the motorcycle 1 from the left or the right. The motorcycle 1 may obliquely collide with another vehicle, a wall, or any other collision object. For example, when a rightward impact force F is applied to a portion of the motorcycle 1 deviated from the center of gravity CG as illustrated in FIG. 4(a), yawing of the motorcycle 1 around the center of gravity CG occurs. In this case, the motorcycle 1 undergoes a rightward acceleration AC, a portion of the motorcycle 1 located forward of the center of gravity CG undergoes a yawing-induced rightward acceleration AR, and a portion of the motorcycle 1 located rearward of the center of gravity CG undergoes a yawing-induced leftward acceleration AL. When the rightward impact force F is applied to the center of gravity CG as illustrated in FIG. 4(b), the motorcycle 1 undergoes the rightward acceleration AC, but the motorcycle 1 undergoes no yawing-induced acceleration AR or AL.

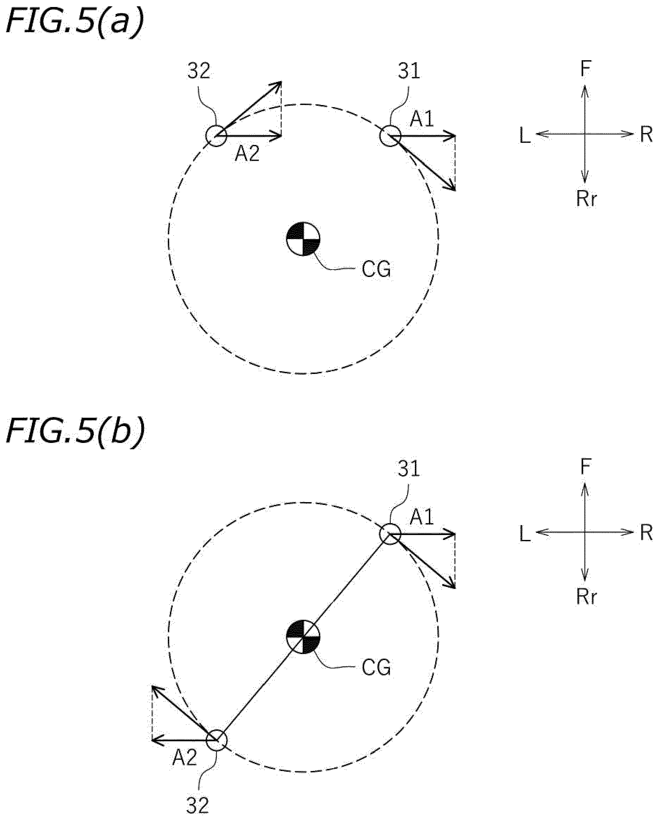

Suppose that both of the first acceleration sensor 31 and the second acceleration sensor 32 are disposed forward of the center of gravity CG as illustrated in FIG. 5(a). In this case, when the yawing of the motorcycle 1 has occurred, a yawing-induced right-left acceleration A1 detected by the first acceleration sensor 31 and a yawing-induced right-left acceleration A2 detected by the second acceleration sensor 32 are both rightward accelerations. Accordingly, if a comparison is made between detection results obtained by the first acceleration sensor 31 and the second acceleration sensor 32, whether an impact fore has applied to the center of gravity CG or to a location deviated from the center of gravity CG is difficult to determine.

In the present not claimed embodiment, however, the first acceleration sensor 31 is disposed forward of the center of gravity CG, and the second acceleration sensor 32 is disposed rearward of the center of gravity CG. As illustrated in FIG. 5(b), when the yawing of the motorcycle 1 has occurred, the yawing-induced right-left acceleration A1 detected by the first acceleration sensor 31 is a rightward acceleration, and the yawing-induced right-left acceleration A2 detected by the second acceleration sensor 32 is a leftward acceleration. A difference between the right-left acceleration detected by the first acceleration sensor 31 and the right-left acceleration detected by the second acceleration sensor 32 increases by a difference between the yawing-induced accelerations A1 and A2. Accordingly, the difference between the right-left acceleration detected by the first acceleration sensor 31 and the right-left acceleration detected by the second acceleration sensor 32 is relatively great.

For example, assuming that an average right-left acceleration the motorcycle 1 undergoes is represented by A0, the right-left acceleration detected by the first acceleration sensor 31 is A0 + A1, and the right-left acceleration detected by the second acceleration sensor 32 is A0 - A2. The difference between the right-left acceleration detected by the first acceleration sensor 31 and the right-left acceleration detected by the second acceleration sensor 32 is calculated by the following expression: (A0 + A1) - (A0 - A2) = A1 + A2. When the yawing of the motorcycle 1 does not occur, the difference between the right-left acceleration detected by the first acceleration sensor 31 and the right-left acceleration detected by the second acceleration sensor 32 is zero or a relatively small value. In the present not claimed embodiment, in particular, the center of gravity CG is located at the midpoint of an imaginary line connecting the first acceleration sensor 31 with the second acceleration sensor 32 in a plan view of the motorcycle 1 (see FIG. 5(b)). Consequently, the present embodiment makes it possible to accurately grasp a situation at the time of an accident.

A portion of the engine 8 of the motorcycle 1 according to the present not claimed embodiment is disposed below the center of gravity CG (see FIG. 1). Depending on the type of a motorcycle (e.g., in the case of a scooter), not only an engine but also a fuel tank, an air cleaner, and/or other component(s) may be disposed below the center of gravity. Thus, in some motorcycles, relatively large vehicle components may be disposed below the center of gravity. Disposing the first acceleration sensor 31 and the second acceleration sensor 32 above the center of gravity CG as in the present not claimed embodiment makes it possible to prevent relatively large vehicle components disposed below the center of gravity CG from interfering with the first acceleration sensor 31 and the second acceleration sensor 32. Accordingly, the present not claimed embodiment is able to increase the flexibility of locations of the vehicle components.

As previously described, an oblique collision of the motorcycle 1 with another vehicle, a wall, or any other collision object results in yawing of the motorcycle 1 around the center of gravity CG. In this case, the first acceleration sensor 31 and the second acceleration sensor 32 each undergo not only a rearward acceleration indicating the magnitude of the collision but also a yawing-induced acceleration.

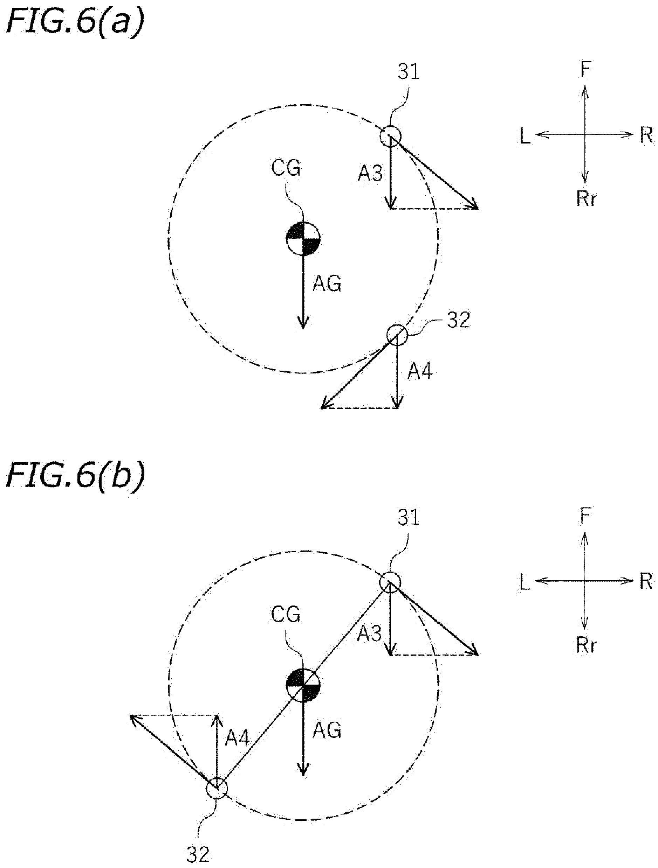

Suppose that both of the first acceleration sensor 31 and the second acceleration sensor 32 are disposed rightward or leftward of the center of gravity CG as illustrated in FIG. 6(a). In this case, when the yawing of the motorcycle 1 has occurred, a yawing-induced front-rear acceleration A3 detected by the first acceleration sensor 31 and a yawing-induced front-rear acceleration A4 detected by the second acceleration sensor 32 are both rearward accelerations. A front-rear acceleration detected by the first acceleration sensor 31 is the sum of an acceleration AG indicating the magnitude of a collision (which will hereinafter be referred to as a "collision acceleration AG") and the yawing-induced front-rear acceleration A3. A front-rear acceleration detected by the second acceleration sensor 32 is the sum of the collision acceleration AG and the yawing-induced front-rear acceleration A4. The acceleration detected by the first acceleration sensor 31 (which is represented as AG + A3) and the acceleration detected by the second acceleration sensor 32 (which is represented as AG + A4) are both values deviated from the collision acceleration AG. Thus, when both of the first acceleration sensor 31 and the second acceleration sensor 32 are disposed rightward or leftward of the center of gravity CG, occurrence of yawing makes it difficult to accurately detect the collision acceleration AG.

In the present not claimed embodiment, however, the first acceleration sensor 31 is disposed rightward of the center of gravity CG, and the second acceleration sensor 32 is disposed leftward of the center of gravity CG. As illustrated in FIG. 6(b), when the yawing of the motorcycle 1 has occurred, the yawing-induced front-rear acceleration A3 detected by the first acceleration sensor 31 is a rearward acceleration, and the yawing-induced front-rear acceleration A4 detected by the second acceleration sensor 32 is a forward acceleration. The acceleration detected by the first acceleration sensor 31 is AG + A3, and the acceleration detected by the second acceleration sensor 32 is AG - A4. Accordingly, the present not claimed embodiment involves calculating the average of the acceleration detected by the first acceleration sensor 31 and the acceleration detected by the second acceleration sensor 32 (which will hereinafter be referred to as an "average acceleration"), so that a portion or an entirety of the yawing-induced front-rear acceleration A3 detected by the first acceleration sensor 31 is cancelled out with the yawing-induced front-rear acceleration A4 detected by the second acceleration sensor 32. Specifically, the average acceleration is calculated as follows: [(AG + A3) + (AG - A4)]/2 = AG + (A3 - A4)/2. The average acceleration thus calculated is relatively close to the collision acceleration AG. Consequently, the present not claimed embodiment is able to relatively accurately detect the collision acceleration AG in accordance with detection results obtained by the first acceleration sensor 31 and the second acceleration sensor 32.

In the present not claimed embodiment, the center of gravity CG is located at the midpoint of an imaginary line connecting the first acceleration sensor 31 with the second acceleration sensor 32 in the plan view of the motorcycle 1 (see FIG. 6(b)). Thus, A3 = A4, with the result that the average acceleration is equal to the collision acceleration AG. Consequently, the present not claimed embodiment is able to accurately detect the collision acceleration AG in accordance with detection results obtained by the first acceleration sensor 31 and the second acceleration sensor 32.

### Second not claimed Embodiment

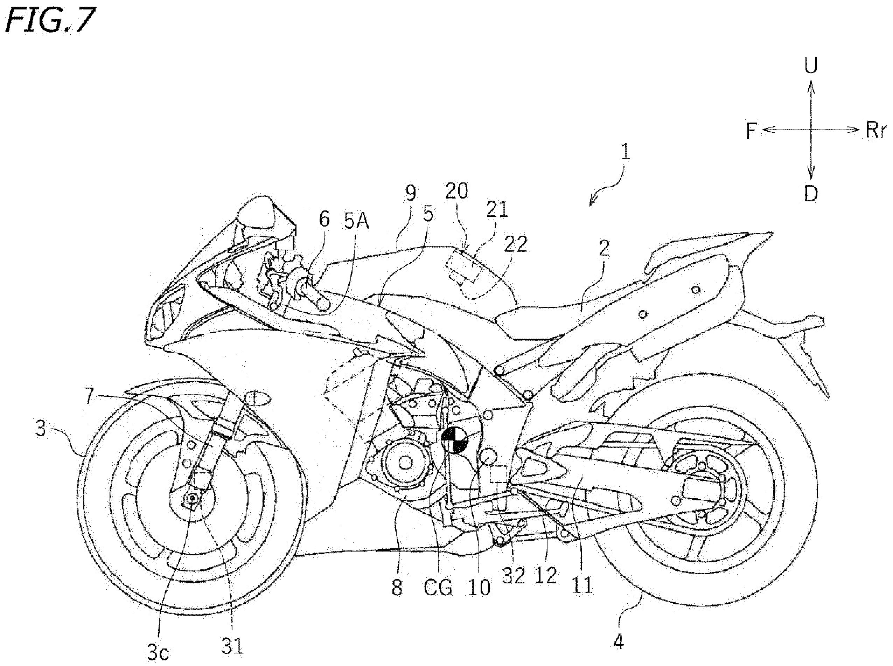

As illustrated in FIGS. 7 to 9, the motorcycle 1 according to a second not claimed embodiment for explaining the general teaching differs from the motorcycle 1 according to the first not claimed embodiment in the positions of a first acceleration sensor 31 and a second acceleration sensor 32. Because the second not claimed embodiment is similar to the first not claimed embodiment except for the positions of the first acceleration sensor 31 and the second acceleration sensor 32, overlapping description will not be given.

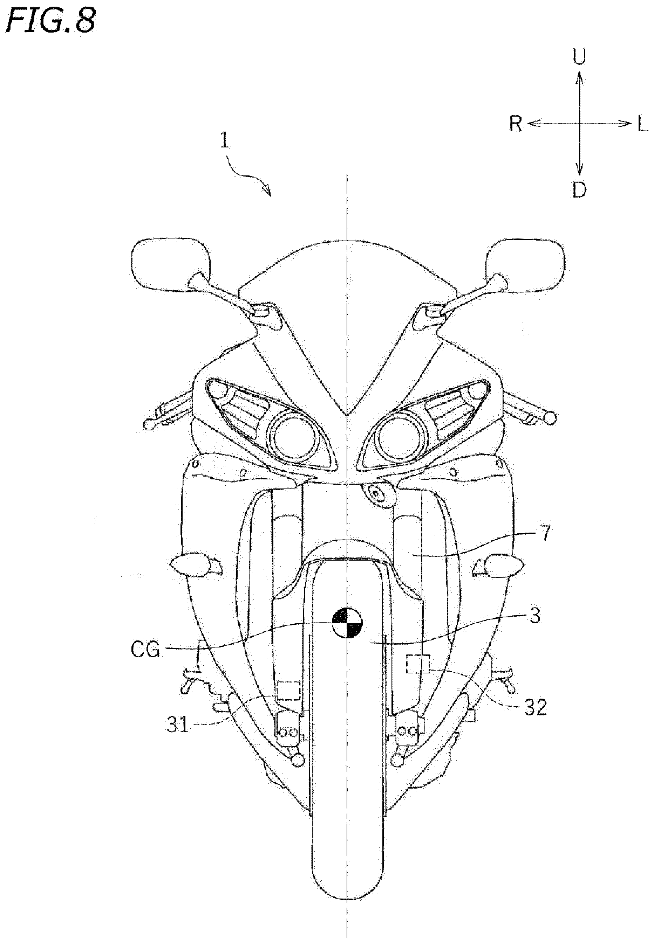

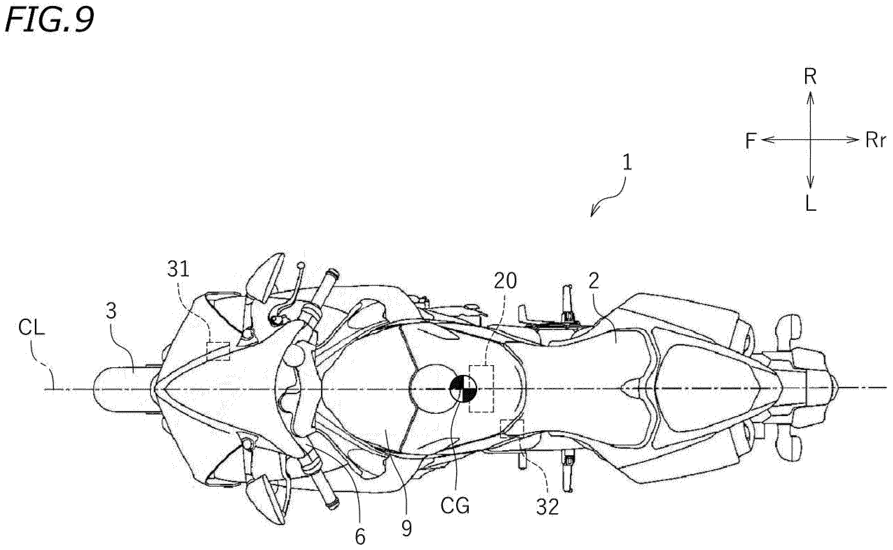

As illustrated in FIGS. 7 and 9, the first acceleration sensor 31 is disposed forward of a center of gravity CG of the motorcycle 1, and the second acceleration sensor 32 is disposed rearward of the center of gravity CG of the motorcycle 1. As illustrated in FIGS. 8 and 9, the first acceleration sensor 31 is disposed rightward of the center of gravity CG of the motorcycle 1, and the second acceleration sensor 32 is disposed leftward of the center of gravity CG of the motorcycle 1. As illustrated in FIGS. 7 and 8, the first acceleration sensor 31 and the second acceleration sensor 32 are disposed below the center of gravity CG of the motorcycle 1.

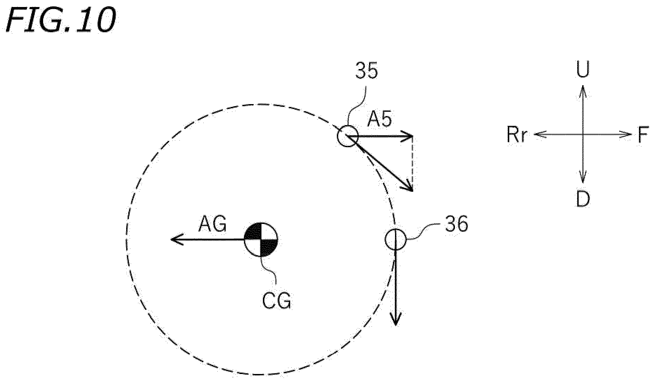

A collision of the motorcycle 1 with another vehicle, a wall, or any other collision object located in front of or forward of the motorcycle 1 lifts a rear portion of the motorcycle 1, resulting in pitching of the motorcycle 1 around the center of gravity CG. As illustrated in FIG. 10, when an acceleration sensor 35 is disposed above the center of gravity CG, an acceleration detected by the acceleration sensor 35 is the sum of an acceleration AG indicating the magnitude of a collision (i.e., a collision acceleration) and a pitching-induced front-rear acceleration A5. The acceleration detected by the acceleration sensor 35 is deviated from the collision acceleration AG by the pitching-induced front-rear acceleration A5. When an acceleration sensor 36 is disposed at the same height as the center of gravity CG, a pitching-induced front-rear acceleration detected by the acceleration sensor 36 is zero. The acceleration detected by the acceleration sensor 36 thus corresponds to the collision acceleration AG. Accordingly, the acceleration sensor 36 thus disposed is able to correctly detect the collision acceleration AG.

At an early stage of a collision, however, not the center of gravity CG but a center 3c (see FIG. 7) of a front wheel 3 actually functions as the center of rotation of pitching owing to contact of the front wheel 3 with a collision object. After the early stage of the collision, the center of pitching shifts from the center 3c of the front wheel 3 to the center of gravity CG. In the present embodiment, the first acceleration sensor 31 and the second acceleration sensor 32 are disposed below the center of gravity CG. Thus, when pitching has occurred owing to a collision, the first acceleration sensor 31 and the second acceleration sensor 32 are located close to the center of rotation of pitching in an vehicle up-down direction from an early stage of the collision. Accordingly, the present embodiment is able to relatively correctly detect the collision acceleration with the first acceleration sensor 31 and the second acceleration sensor 32. In the present embodiment, in particular, the first acceleration sensor 31 and the second acceleration sensor 32 are disposed above the center 3c of the front wheel 3 and below the center of gravity CG. The first acceleration sensor 31 and the second acceleration sensor 32 are thus located close to the center of rotation of pitching in the vehicle up-down direction from an early stage to a final stage of a collision. Consequently, the present embodiment is able to relatively accurately detect the collision acceleration. In the present embodiment, the first acceleration sensor 31 is disposed rearward of the center 3c of the front wheel 3 and forward of the center of gravity CG. With the first acceleration sensor 31, the present embodiment is able to more accurately detect the collision acceleration from an early stage to a final stage of a collision.

In the present embodiment, the first acceleration sensor 31 is disposed forward of the center of gravity CG and the second acceleration sensor 32 is disposed rearward of the center of gravity CG similarly to the first not claimed embodiment. Thus, similarly to the first not claimed embodiment the present not claimed embodiment is able to determine whether an impact force has applied to the center of gravity CG or to a location deviated from the center of gravity CG in a vehicle front-rear direction of the motorcycle 1 in accordance with detection results obtained by the first acceleration sensor 31 and the second acceleration sensor 32.

In the present not claimed embodiment, the first acceleration sensor 31 is disposed rightward of the center of gravity CG and the second acceleration sensor 32 is disposed leftward of the center of gravity CG similarly to the first embodiment. Thus, if yawing has occurred owing to a collision, the present not claimed embodiment would be able to relatively accurately detect the collision acceleration in accordance with detection results obtained by the first acceleration sensor 31 and the second acceleration sensor 32.

### Third Embodiment

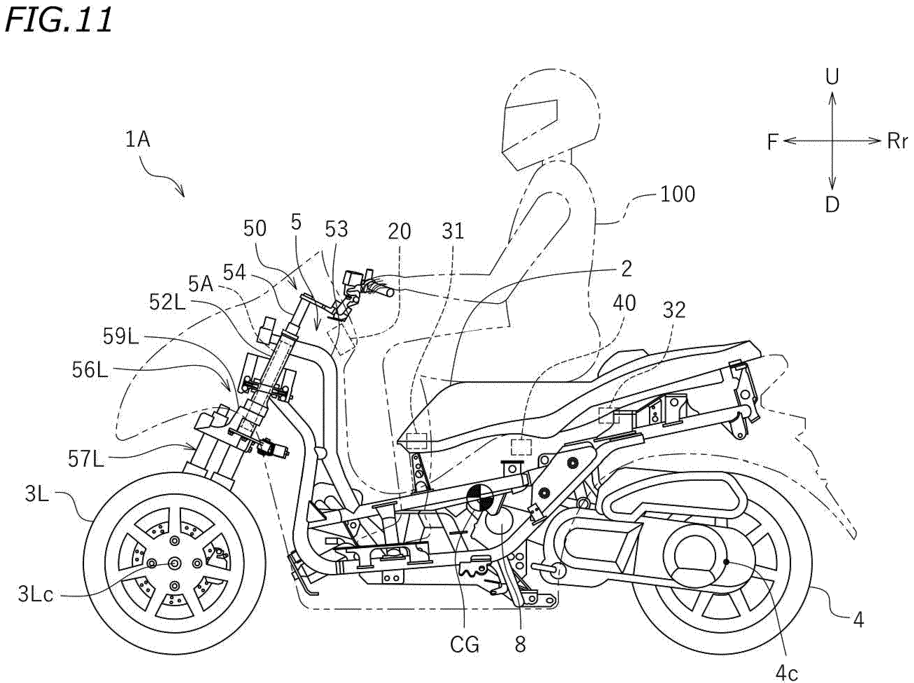

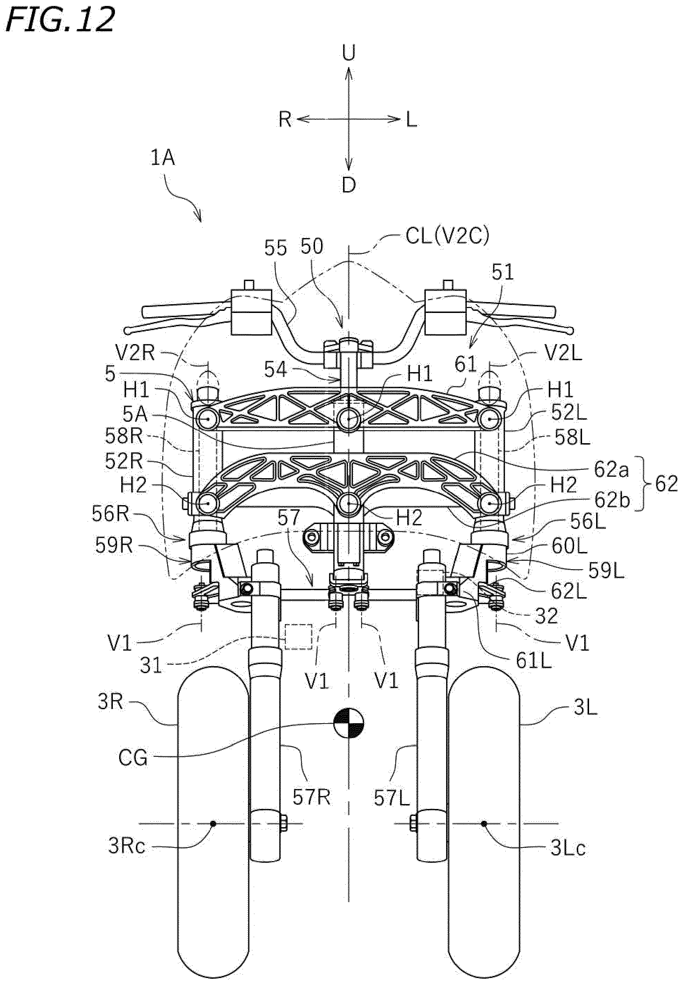

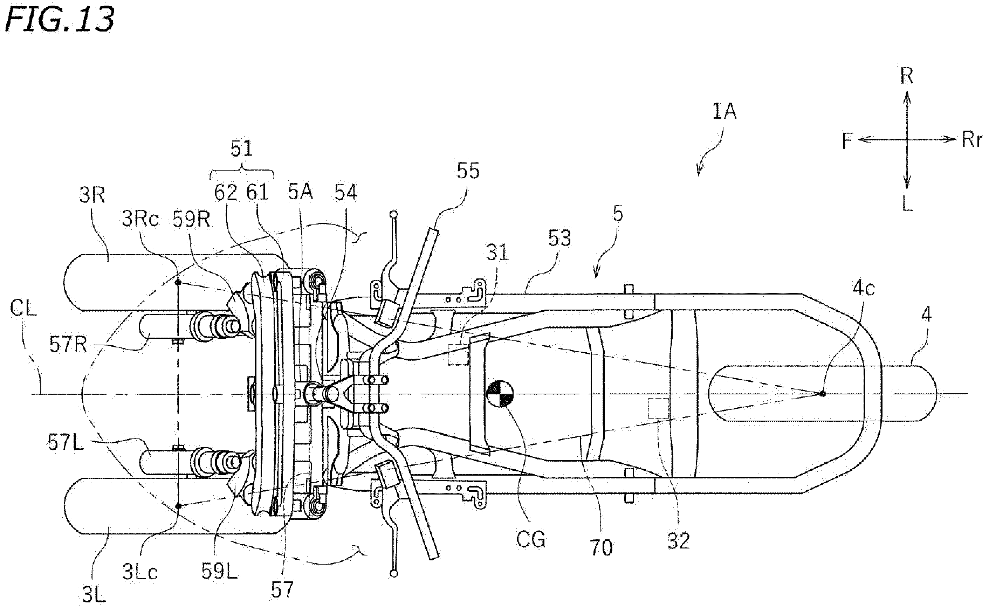

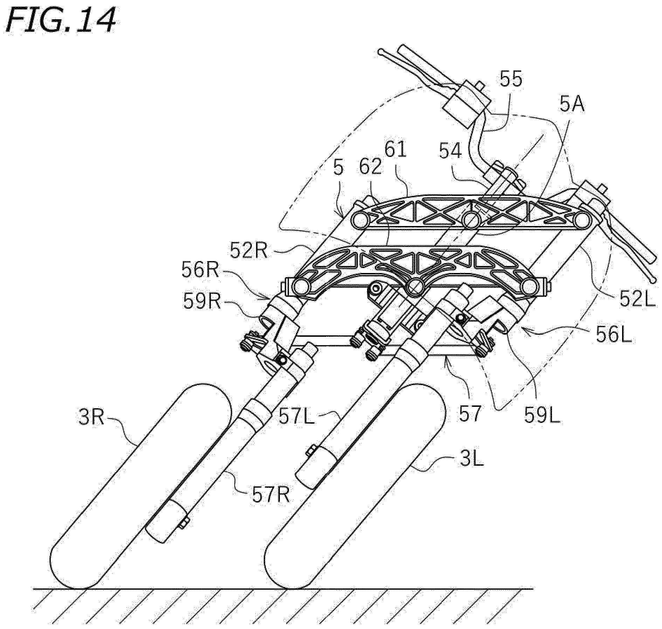

As illustrated in FIGS. 11 to 13, a straddled vehicle according to a third embodiment according to the teaching of the independent claim is a leaning vehicle 1A including two front wheels (i.e., a left front wheel 3L and a right front wheel 3R) and a rear wheel 4. The leaning vehicle 1A is a motor tricycle. FIG. 11 is a left side view of main components of the leaning vehicle 1A. FIG. 12 is a front view of the main components of the leaning vehicle 1A. FIG. 13 is a plan view of the main components of the leaning vehicle 1A. The leaning vehicle 1A inclines rightward in making a right turn and inclines leftward in making a left turn (see FIG. 14). In the following description, components similar to or corresponding to those in the first not claimed embodiment are identified by the same reference signs.

As illustrated in FIG. 11, the leaning vehicle 1A includes a seat 2 on which a rider 100 sits. The following description is based on the assumption that unless otherwise specified, the terms "front", "rear", "left", "right", "up", and "down" respectively refer to front, rear, left, right, up, and down with respect to a virtual rider sitting on the seat 2 when the leaning vehicle 1A with no rider 100 or luggage thereon is stationary in an upright position on a horizontal plane. The reference signs "F", "Rr", "L", "R", "U", and "D" in the drawings respectively represent front, rear, left, right, up, and down.

The leaning vehicle 1A includes a body frame 5, the left front wheel 3L, the right front wheel 3R, the rear wheel 4, and an engine 8 to drive the rear wheel 4. As illustrated in FIG. 12, the leaning vehicle 1A further includes: a steering mechanism 50 to steer the left front wheel 3L and the right front wheel 3R; and a link mechanism 51 to incline the left front wheel 3L and the right front wheel 3R in accordance with an inclination of the body frame 5.

As illustrated in FIG. 11, the body frame 5 includes a head pipe 5A and a main frame 53 extending rearward from the head pipe 5A. As illustrated in FIG. 12, the body frame 5 further includes: a left side member 52L disposed to the left of the head pipe 5A; and a right side member 52R disposed to the right of the head pipe 5A. The left side member 52L and the right side member 52R are each in the form of a pipe and disposed in parallel or substantially in parallel with the head pipe 5A.

As illustrated in FIG. 13, the left front wheel 3L is disposed leftward of the head pipe 5A, and the right front wheel 3R is disposed rightward of the head pipe 5A. In a plan view of the leaning vehicle 1A, the left front wheel 3L is disposed to the left of a vehicle central line CL, and the right front wheel 3R is disposed to the right of the vehicle central line CL. The rear wheel 4 is disposed on the vehicle central line CL in the plan view of the leaning vehicle 1A.

The link mechanism 51 connects the head pipe 5A, the left side member 52L, and the right side member 52R to each other. The link mechanism 51 is configured to incline the left side member 52L and the right side member 52R in accordance with an inclination of the head pipe 5A (see FIG. 14). The link mechanism 51 includes a first cross member 61 and a second cross member 62 each extending in a vehicle right-left direction.

The first cross member 61 is connected to the head pipe 5A, the left side member 52L, and the right side member 52R such that the first cross member 61 is rotatable around upper link axes H1 each extending in a vehicle front-rear direction. The second cross member 62 includes: a front cross member 62a disposed in front of the head pipe 5A; and a rear cross member 62b disposed behind the head pipe 5A. The second cross member 62 is connected to the head pipe 5A, the left side member 52L, and the right side member 52R such that the second cross member 62 is rotatable around lower link axes H2 each extending in the vehicle front-rear direction.

The steering mechanism 50 includes a steering shaft 54, a handlebar 55, a left front wheel support member 56L, a right front wheel support member 56R, and a tie rod 57. The steering shaft 54 is inserted into the head pipe 5A. The steering shaft 54 is rotatably supported by the head pipe 5A. The handlebar 55 is secured to an upper portion of the steering shaft 54.

The left front wheel support member 56L is provided on the left side member 52L so as to be rotatable around a left steering axis V2L extending in an vehicle up-down direction of the body frame 5. The left front wheel 3L is rotatably supported by the left front wheel support member 56L. The left front wheel support member 56L includes: a left fork 57L supporting the left front wheel 3L; a left shaft 58L supported by the left side member 52L so as to be rotatable around the left steering axis V2L; and a left bracket 59L connecting the left fork 57L and the left shaft 58L to each other. The left shaft 58L is inserted into the left side member 52L so as to be rotatable around the left steering axis V2L. The left bracket 59L includes: a left shaft securer 60L to which the left shaft 58L is secured; a securer 61L to which the left fork 57L is secured; and a left connector 62L to which the tie rod 57 is connected.

The right front wheel support member 56R includes a right shaft 58R, a right fork 57R, and a right bracket 59R. The right shaft 58R, the right fork 57R, and the right bracket 59R are respectively symmetrical in shape and location to the left shaft 58L, the left fork 57L, and the left bracket 59L with respect to the vehicle central line CL.

The tie rod 57 synchronizes rotation of the steering shaft 54 around a central steering axis V2C, rotation of the left front wheel support member 56L around the left steering axis V2L, and rotation of the right front wheel support member 56R around a right steering axis V2R. The tie rod 57 is connected to the steering shaft 54, the left front wheel support member 56L, and the right front wheel support member 56R such that the tie rod 57 is rotatable around axes V1 each extending in the vehicle up-down direction.

As illustrated in FIG. 11, the leaning vehicle 1A includes an airbag device 20. Although not illustrated in FIG. 11, the airbag device 20 includes an airbag 21 and an inflator 22 (see FIG. 1) similarly to the first not claimed embodiment.

The leaning vehicle 1A includes a first acceleration sensor 31 and a second acceleration sensor 32. The first acceleration sensor 31 and the second acceleration sensor 32 are directly or indirectly supported by the body frame 5. As illustrated in FIGS. 11 and 13, the first acceleration sensor 31 is disposed forward of a center of gravity CG of the leaning vehicle 1A, and the second acceleration sensor 32 is disposed rearward of the center of gravity CG of the leaning vehicle 1A. As illustrated in FIGS. 12 and 13, the first acceleration sensor 31 is disposed rightward of the center of gravity CG of the leaning vehicle 1A, and the second acceleration sensor 32 is disposed leftward of the center of gravity CG of the leaning vehicle 1A. As illustrated in FIGS. 11 and 12, the first acceleration sensor 31 and the second acceleration sensor 32 are disposed above the center of gravity CG of the leaning vehicle 1A.

As illustrated in FIG. 13, the center of gravity CG of the leaning vehicle 1A is located inside a virtual triangle 70 whose apexes are defined by a center 3Lc of the left front wheel 3L, a center 3Rc of the right front wheel 3R, and a center 4c of the rear wheel 4 in the plan view of the leaning vehicle 1A. As used herein, the term "center 3Lc of the left front wheel 3L" refers to a point located on a rotation center line of the left front wheel 3L and located at a middle position in a vehicle right-left direction of the left front wheel 3L. As used herein, the term "center 3Rc of the right front wheel 3R" refers to a point located on a rotation center line of the right front wheel 3R and located at a middle position in a vehicle right-left direction of the right front wheel 3R. As used herein, the term "center 4c of the rear wheel 4" refers to a point located on a rotation center line of the rear wheel 4 and located at a middle position in a vehicle right-left direction of the rear wheel 4. The first acceleration sensor 31 and the second acceleration sensor 32 are disposed inside the triangle 70 in the plan view of the leaning vehicle 1A.

Similarly to the first not claimed embodiment, the leaning vehicle 1A includes a controller 40 (see FIG. 11) communicably connected to the first acceleration sensor 31, the second acceleration sensor 32, and the inflator 22 of the airbag device 20. The controller 40 causes the airbag 21 to expand by activating the inflator 22 in accordance with detection result(s) obtained by the first acceleration sensor 31 and/or the second acceleration sensor 32. The leaning vehicle 1A may include a memory (not illustrated) to store detection results obtained by the first acceleration sensor 31 and the second acceleration sensor 32.

Detecting accelerations at locations close to the center of gravity CG has the advantage of being resistant to disturbances in accurately grasping accelerations the leaning vehicle 1A undergoes at the time of a collision. Detecting accelerations at the time of a collision at locations close to the center of gravity CG makes it possible to reduce the influence of noise produced by deformation and/or vibrations of a vehicle body. When the leaning vehicle 1A collides with a collision object located in front of or forward of the leaning vehicle 1A, braking the leaning vehicle 1A immediately before the collision, for example, may lift a rear portion of the leaning vehicle 1A, causing the center of gravity CG to shit forward on the leaning vehicle 1A. If such a situation occurs, however, the center of gravity CG of the leaning vehicle 1A would be highly likely to be located inside the triangle 70. In the present embodiment, the first acceleration sensor 31 and the second acceleration sensor 32 are disposed inside the triangle 70 in the plan view as previously mentioned. Accordingly, if the center of gravity CG shifts forward on the leaning vehicle 1A at the time of a collision, accelerations at the time of the collision would be detected at locations close to the center of gravity CG, and thus the influence of disturbances would be reduced. Consequently, the present embodiment is able to successfully detect collision-induced accelerations.

In the present embodiment, the first acceleration sensor 31 is disposed forward of the center of gravity CG and the second acceleration sensor 32 is disposed rearward of the center of gravity CG similarly to the first not claimed embodiment. Thus, similarly to the first not claimed embodiment. the present embodiment is able to determine whether an impact force has applied to the center of gravity CG or to a location deviated from the center of gravity CG in a vehicle front-rear direction of the leaning vehicle 1A in accordance with detection results obtained by the first acceleration sensor 31 and the second acceleration sensor 32.

In the present embodiment, the first acceleration sensor 31 and the second acceleration sensor 32 are disposed above the center of gravity CG similarly to the first not claimed embodiment. Accordingly, the present embodiment is able to prevent relatively large vehicle components disposed below the center of gravity CG from interfering with the first acceleration sensor 31 and the second acceleration sensor 32. Consequently, the present embodiment is able to increase the flexibility of locations of the vehicle components.

In the present embodiment, the first acceleration sensor 31 is disposed rightward of the center of gravity CG and the second acceleration sensor 32 is disposed leftward of the center of gravity CG similarly to the first not claimed embodiment. Thus, if yawing has occurred owing to a collision, the present embodiment would be able to relatively accurately detect a collision acceleration in accordance with detection results obtained by the first acceleration sensor 31 and the second acceleration sensor 32.

### Fourth not claimed Embodiment

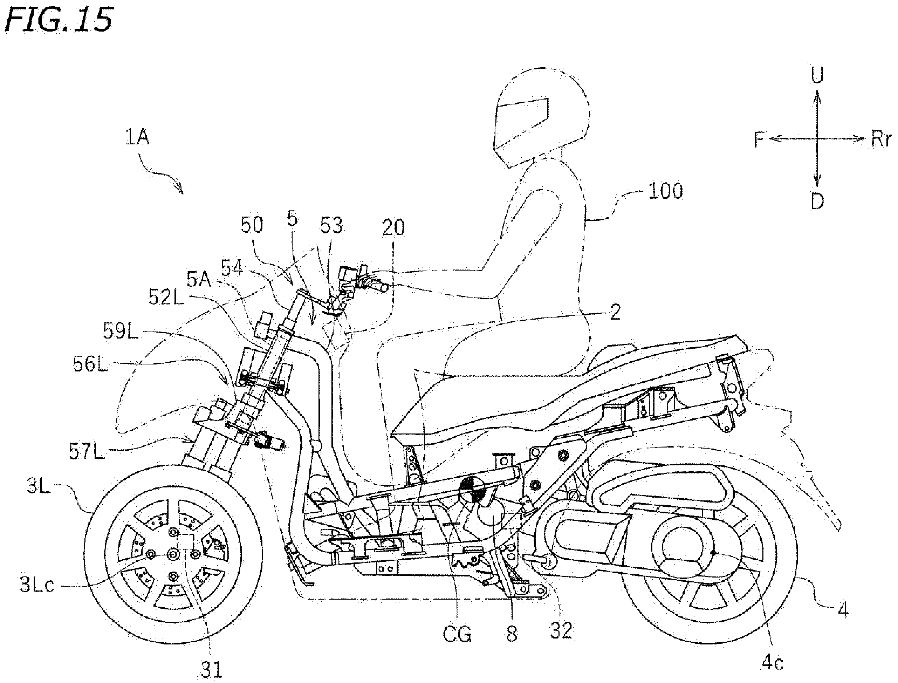

As illustrated in FIGS. 15 to 17, a leaning vehicle 1A according to a fourth not claimed embodiment for explaining the general teaching differs from the leaning vehicle 1A according to the third embodiment in the positions of a first acceleration sensor 31 and a second acceleration sensor 32. Because the fourth not claimed embodiment is similar to the third embodiment except for the positions of the first acceleration sensor 31 and the second acceleration sensor 32, overlapping description will not be given.

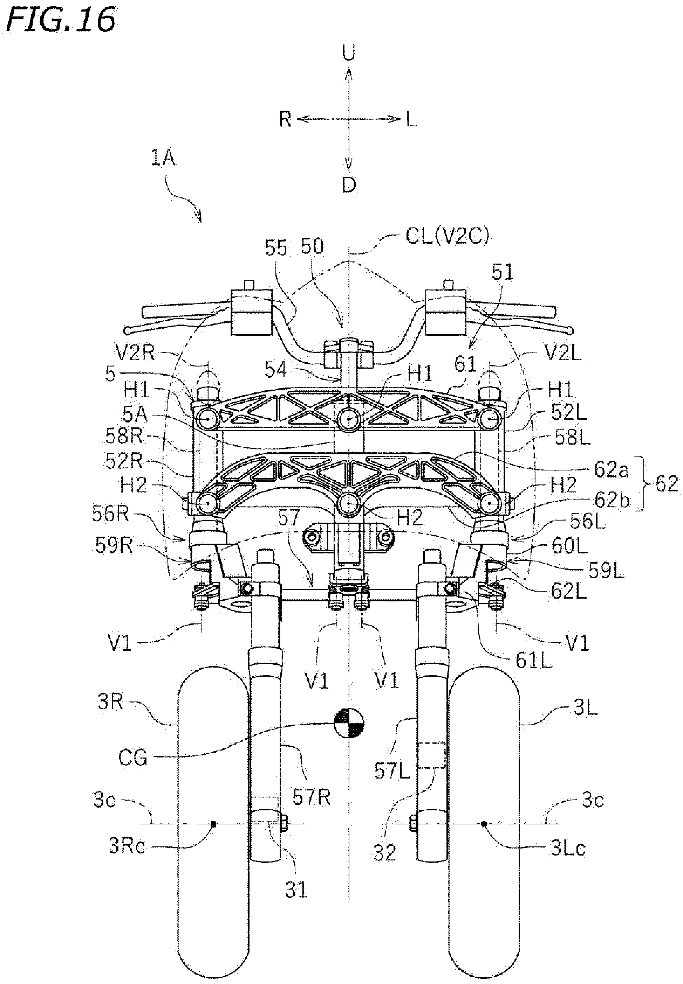

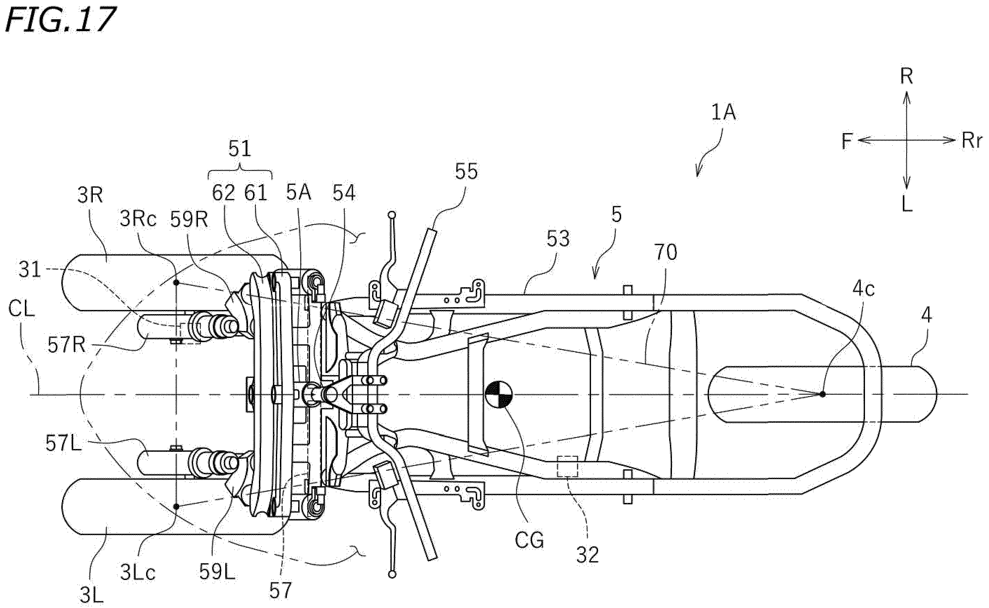

As illustrated in FIGS. 15 and 17, the first acceleration sensor 31 is disposed forward of a center of gravity CG of the leaning vehicle 1A, and the second acceleration sensor 32 is disposed rearward of the center of gravity CG of the leaning vehicle 1A. As illustrated in FIGS. 16 and 17, the first acceleration sensor 31 is disposed rightward of the center of gravity CG of the leaning vehicle 1A, and the second acceleration sensor 32 is disposed leftward of the center of gravity CG of the leaning vehicle 1A. As illustrated in FIGS. 15 and 16, the first acceleration sensor 31 and the second acceleration sensor 32 are disposed below the center of gravity CG of the leaning vehicle 1A. As illustrated in FIG. 17, the first acceleration sensor 31 is disposed inside a virtual triangle 70 whose apexes are defined by a center 3Lc of a left front wheel 3L, a center 3Rc of a right front wheel 3R, and a center 4c of a rear wheel 4 in a plan view of the leaning vehicle 1A.

In the present not claimed embodiment, the first acceleration sensor 31 and the second acceleration sensor 32 are disposed below the center of gravity CG similarly to the second not claimed embodiment. Thus, when pitching has occurred owing to a collision, the first acceleration sensor 31 and the second acceleration sensor 32 are located close to the center of rotation of pitching in an vehicle up-down direction from an early stage of the collision similarly to the second not claimed embodiment. Accordingly, the present not claimed embodiment is able to relatively correctly detect a collision acceleration with the first acceleration sensor 31 and the second acceleration sensor 32. In the present not claimed embodiment, in particular, the first acceleration sensor 31 and the second acceleration sensor 32 are disposed above rotation centers 3c (see FIG. 16) of the left front wheel 3L and the right front wheel 3R and below the center of gravity CG. The first acceleration sensor 31 and the second acceleration sensor 32 are thus located close to the center of rotation of pitching in the vehicle up-down direction from an early stage to a final stage of a collision. Consequently, the present not claimed embodiment is able to relatively accurately detect a collision acceleration. In the present not claimed embodiment, the first acceleration sensor 31 is disposed rearward of the rotation centers 3c of the left front wheel 3L and the right front wheel 3R and forward of the center of gravity CG. With the first acceleration sensor 31, the present not claimed embodiment is able to more accurately detect a collision acceleration from an early stage to a final stage of a collision.

In the present not claimed embodiment, the first acceleration sensor 31 is disposed forward of the center of gravity CG and the second acceleration sensor 32 is disposed rearward of the center of gravity CG similarly to the first not claimed embodiment. Thus, similarly to the first not claimed embodiment the present not claimed embodiment is able to determine whether an impact force has applied to the center of gravity CG or to a location deviated from the center of gravity CG in a vehicle front-rear direction of the leaning vehicle 1A in accordance with detection results obtained by the first acceleration sensor 31 and the second acceleration sensor 32.

In the present not claimed embodiment, the first acceleration sensor 31 is disposed rightward of the center of gravity CG and the second acceleration sensor 32 is disposed leftward of the center of gravity CG similarly to the first not claimed embodiment. Thus, if yawing has occurred owing to a collision, the present not claimed embodiment would be able to relatively accurately detect a collision acceleration in accordance with detection results obtained by the first acceleration sensor 31 and the second acceleration sensor 32.

In the present not claimed embodiment, the first acceleration sensor 31 is disposed inside the triangle 70 in the plan view similarly to the third embodiment. Accordingly, if the center of gravity CG shifts forward on the leaning vehicle 1A at the time of a collision, an acceleration at the time of the collision would be detected at a location close to the center of gravity CG by the first acceleration sensor 31, and thus the influence of disturbances would be reduced. Consequently, with the first acceleration sensor 31, the present not claimed embodiment is able to successfully detect a collision-induced acceleration. In the present not claimed embodiment, the second acceleration sensor 32 is located outside the triangle 70 in the plan view. Alternatively, the second acceleration sensor 32 may be disposed inside the triangle 70 in the plan view similarly to the third embodiment. In this case, the fourth not claimed embodiment is able to achieve effects similar to those achieved by the third embodiment.

Although several embodiments of the straddled vehicles have been described thus far, the foregoing embodiments are presented by way of example only. Various other embodiments are possible.

In a variation of the first , second and fourth not claimed embodiments and the third embodiment, the first acceleration sensor 31 may be disposed forward and leftward of the center of gravity CG, and/or the second acceleration sensor 32 may be disposed rearward and rightward of the center of gravity CG. In the variation of the first ,second and fourth not claimed embodiments and the third embodiment, the positions of the first acceleration sensor 31 and the second acceleration sensor 32 may be reversed.

The driving source for travel of the straddled vehicle according to each of the foregoing embodiments is not limited to the engine 8. The driving source for travel of the straddled vehicle according to each of the foregoing embodiments may be an electric motor.

As used herein, the term "straddled vehicle" refers to a vehicle that a rider straddles to ride. The term "straddled vehicle" used herein is not limited to a motorcycle. The term "straddled vehicle" used herein is limited to a motor tricycle including two front wheels and a rear wheel. The straddled vehicle according to each of the foregoing embodiments is configured such that its body frame inclines relative to the ground when the straddled vehicle makes a turn. The straddled vehicle according to each of the foregoing embodiments does not necessarily have to be configured such that its body frame inclines. The straddled vehicle according to each of the foregoing embodiments may be, for example, an all-terrain vehicle (ATV).

### REFERENCE SIGNS LIST

- 1: motorcycle (straddled vehicle)
- 1A: leaning vehicle (straddled vehicle)
- 2: seat
- 3: front wheel
- 3L: left front wheel
- 3R: right front wheel
- 4: rear wheel
- 5: body frame
- 5A: head pipe
- 21: airbag
- 31: first acceleration sensor
- 32: second acceleration sensor
- 70: triangle
- CG: center of gravity

## Claims

1. A straddled vehicle (1) comprising:
a body frame (5) including a head pipe (5A);
a left front wheel (3L) disposed leftward of the head pipe (5A) with regard to a vehicle right-left direction, the left front wheel (3L) is provided with a center (3Lc) as a point located on a rotation center line of the left front wheel (3L) and located at a middle position in the vehicle right-left direction of the left front wheel (3L),
a right front wheel (3R) disposed rightward of the head pipe (5A) with regard to the vehicle right-left direction, the right front wheel (3R) is provided with a center (3Rc) as a point located on a rotation center line of the right front wheel (3R) and located at a middle position in the vehicle right-left direction of the right front wheel (3R), and
a rear wheel (4) supported by the body frame (5), the rear wheel (4) is disposed on a vehicle central line (CL) in a plan view of the straddled vehicle (1), the rear wheel (4) is provided with a center (4c) as a point located on a rotation center line of the rear wheel (4) and located at a middle position in the vehicle right-left direction of the rear wheel (4), defining a virtual triangle (70) whose apexes are defined by the center (3Lc) of the left front wheel (3L), the center (3Rc) of the right front wheel (3R), and the center (4c) of the rear wheel (4) in the plan view of the straddled vehicle (1); the center of gravity (CG) of the straddled vehicle (1) is located inside the virtual triangle (70); and
a seat (2) disposed behind the head pipe (5A) with regard to a vehicle front-rear direction and supported by the body frame (5), **characterized by**
a first acceleration sensor (31) configured to detect an acceleration of the vehicle (1); and
an airbag (21) configured to expand in accordance with the acceleration of the vehicle (1) detected by the first acceleration sensor (31), and
further comprising a second acceleration sensor (32) configured to detect an acceleration of the vehicle (1), wherein one of the first acceleration sensor (31) and the second acceleration sensor (32) is disposed forward of the center of gravity (CG) of
the straddled vehicle (1) with regard to the vehicle front-rear direction, and the other one of the first acceleration sensor (31) and the second acceleration sensor (32) is disposed rearward of the center of gravity (CG) of the straddled vehicle (1) with regard to the vehicle front-rear direction, and
the first acceleration sensor (31) and the second acceleration sensor (32) are disposed inside the virtual triangle (70) whose apexes are defined by the center (3Lc) of the left front wheel (3L), the center (3Rc) of the right front wheel (3R), and the center (4c) of the rear wheel (4) in the plan view of the straddled vehicle (1).

2. The straddled vehicle (1) according to claim 1, **characterized in that** one of the first acceleration sensor (31) and the second acceleration sensor (32) is disposed leftward of the center of gravity (CG) of the straddled vehicle (1) with regard to a vehicle right-left direction, and the other one of the first acceleration sensor (31) and the second acceleration sensor (32) is disposed rightward of the center of gravity (CG) of the straddled vehicle (1) with regard to the vehicle right-left direction.

3. The straddled vehicle (1) according to claim 1 or 2, **characterized in that** the first acceleration sensor (31) is disposed above the center of gravity (CG) of the straddled vehicle (1) with regard to a vehicle up-down direction.

4. The straddled vehicle (1) according to claim 1 or 2, **characterized in that** the first acceleration sensor (31) is disposed below the center of gravity (CG) of the straddled vehicle (1) with regard to a vehicle up-down direction.

## Patentansprüche

1. Ein Spreizsitzfahrzeug (1), das umfasst:
einen Fahrzeugkörperrahmen (5) mit einem Kopfrohr (5A);
ein linkes Vorderrad (3L), das in Bezug auf die Fahrzeug-Rechts-Links-Richtung links vom Kopfrohr (5A) angeordnet ist, wobei das linke Vorderrad (3L) mit einem Mittelpunkt (3Lc) versehen ist, der als Punkt auf einer Drehmittelachse des linken Vorderrads (3L) und in einer mittleren Position in der Fahrzeug-Rechts-Links-Richtung des linken Vorderrads (3L) angeordnet ist,
ein rechtes Vorderrad (3R), das in Bezug auf die Fahrzeug-Rechts-Links-Richtung rechts vom Kopfrohr (5A) angeordnet ist, wobei das rechte Vorderrad (3R) mit einem Mittelpunkt (3Rc) versehen ist, der auf einer Drehmittelachse des rechten Vorderrads (3R) liegt und sich in einer mittleren Position in der Fahrzeug-Rechts-Links-Richtung des rechten Vorderrads (3R) angeordnet ist, und
ein Hinterrad (4), das vom Fahrzeugkörperrahmen (5) getragen wird, wobei das Hinterrad (4) in einer Draufsicht auf das Spreizsitzfahrzeug (1) auf einer Fahrzeugmittellinie (CL) angeordnet ist, das Hinterrad (4) ist mit einem Mittelpunkt (4c) versehen, der auf einer Drehmittelachse des Hinterrads (4) liegt und sich in einer mittleren Position in der Fahrzeug-Rechts-Links-Richtung des Hinterrads (4) befindet, wodurch ein virtuelles Dreieck (70) definiert wird, dessen Eckpunkte durch den Mittelpunkt (3Lc) des linken Vorderrads (3L), dem Mittelpunkt (3Rc) des rechten Vorderrades (3R) und dem Mittelpunkt (4c) des Hinterrades (4) in der Draufsicht auf das Spreizsitzfahrzeug (1) definiert wird; der Schwerpunkt (CG) des Spreizsitzfahrzeugs (1) liegt innerhalb des virtuellen Dreiecks (70); und
einen Sitz (2), der in Bezug auf die Vorder-Rück-Richtung hinter dem Kopfrohr (5A) angeordnet ist und vom Fahrzeugkörperrahmen (5) getragen wird, **gekennzeichnet durch**
einen ersten Beschleunigungssensor (31), der so konfiguriert ist, dass er eine Beschleunigung des Fahrzeugs (1) erfasst; und
einen Airbag (21), der so konfiguriert ist, dass er sich entsprechend der vom ersten Beschleunigungssensor (31) erfassten Beschleunigung des Fahrzeugs (1) ausdehnt, und
weiterhin einen zweiten Beschleunigungssensor (32) umfasst, der konfiguriert ist, um eine Beschleunigung des Fahrzeugs (1) zur erfassen, wobei einer der ersten Beschleunigungssensor (31) und der zweite Beschleunigungssensor (32) in Bezug auf die Fahrzeuglängsrichtung vor dem Schwerpunkt (CG) des Spreizsitzfahrzeugs (1) angeordnet ist, und der andere der erste Beschleunigungssensor (31) und der zweite Beschleunigungssensor (32) hinter dem Schwerpunkt (CG) des Spreizsitzfahrzeugs (1) in Bezug auf die Fahrzeug-Vorder-Rück-Richtung angeordnet ist, und
der erste Beschleunigungssensor (31) und der zweite Beschleunigungssensor (32) innerhalb des virtuellen Dreiecks (70) angeordnet sind, dessen Eckpunkte durch den Mittelpunkt (3Lc) des linken Vorderrades (3L), den Mittelpunkt (3Rc) des rechten Vorderrades (3R) und den Mittelpunkt (4c) des Hinterrades (4) in der Draufsicht auf das Spreizsitzfahrzeug (1) definiert werden.

2. Das Spreizsitzfahrzeug (1) gemäß Anspruch 1, **dadurch gekennzeichnet, dass** einer der erste Beschleunigungssensor (31) und der zweite Beschleunigungssensor (32) in Bezug auf die Fahrzeug-Rechts-Links-Richtung links vom Schwerpunkt (CG) des Spreizsitzfahrzeugs (1) angeordnet ist, und der andere der erste Beschleunigungssensor (31) und der zweite Beschleunigungssensor (32) in Bezug auf die Fahrzeug-Rechts-Links-Richtung rechts vom Schwerpunkt (CG) des Spreizsitzfahrzeugs (1) angeordnet ist.

3. Das Spreizsitzfahrzeug (1) gemäß Anspruch 1 oder 2, **dadurch gekennzeichnet, dass** der erste Beschleunigungssensor (31) in Bezug auf eine Fahrzeug-Auf-Ab-Richtung oberhalb des Schwerpunkts (CG) des Spreizsitzfahrzeugs (1) angeordnet ist.

4. Das Spreizsitzfahrzeug (1) gemäß Anspruch 1 oder 2, **dadurch gekennzeichnet, dass** der erste Beschleunigungssensor (31) unterhalb des Schwerpunkts (CG) des Spreizsitzfahrzeugs (1) in Bezug auf eine Fahrzeug-Auf-Ab-Richtung angeordnet ist.

## Revendications

1. Véhicule à selle (1) comprenant :
un cadre (5) incluant une tête de fourche (5A) ;
une roue avant gauche (3L) disposée à gauche de la tête de fourche (5A) par rapport à une direction droite-gauche de véhicule, la roue avant gauche (3L) est dotée d'un centre (3Lc) comme point situé sur une ligne de centre de rotation de la roue avant gauche (3L) et situé sur une position médiane dans la direction droite-gauche de véhicule de la roue avant gauche (3L),
une roue avant droite (3R) disposée à droite de la tête de fourche (5A) par rapport à la direction droite-gauche de véhicule, la roue avant droite (3R) est dotée d'un centre (3Rc) comme point situé sur une ligne de centre de rotation de la roue avant droite (3R) et situé sur une position médiane dans la direction droite-gauche de véhicule de la roue avant droite (3R), et
une roue arrière (4) soutenue par le cadre (5), la roue arrière (4) est disposée sur une ligne centrale de véhicule (CL) dans une vue en plan du véhicule à selle (1), la roue arrière (4) est dotée d'un centre (4c) comme point situé sur une ligne de centre de rotation de la roue arrière (4) et situé sur une position médiane dans la direction droite-gauche de véhicule de la roue arrière (4), une définition d'un triangle virtuel (70) dont des sommets sont définis par le centre (3Lc) de la roue avant gauche (3L), le centre (3Rc) de la roue avant droite (3R) et le centre (4c) de la roue arrière (4) dans la vue en plan du véhicule à selle (1) ; le centre de gravité (CG) du véhicule à selle (1) est situé à l'intérieur du triangle virtuel (70) ; et
une selle (2) disposée derrière la tête de fourche (5A) par rapport à une direction avant-arrière de véhicule et soutenue par le cadre (5), **caractérisé par**
un premier capteur d'accélération (31) configuré pour détecter une accélération du véhicule (1) ; et
un airbag (21) configuré pour se développer en fonction de l'accélération du véhicule (1) détectée par le premier capteur d'accélération (31), et
comprenant en outre un deuxième capteur d'accélération (32) configuré pour détecter une accélération du véhicule (1), dans lequel un du premier capteur d'accélération (31) et du deuxième capteur d'accélération (32) est disposé en avant du centre de gravité (CG) du véhicule à selle (1) par rapport à la direction avant-arrière de véhicule, et l'autre du premier capteur d'accélération (31) et du deuxième capteur d'accélération (32) est disposé en arrière du centre de gravité (CG) du véhicule à selle (1) par rapport à la direction avant-arrière de véhicule, et
le premier capteur d'accélération (31) et le deuxième capteur d'accélération (32) sont disposés à l'intérieur du triangle virtuel (70) dont des sommets sont définis par le centre (3Lc) de la roue avant gauche (3L), le centre (3Rc) de la roue avant droite (3R) et le centre (4c) de la roue arrière (4) dans la vue en plan du véhicule à selle (1).

2. Le véhicule à selle (1) selon la revendication 1, **caractérisé en ce que** un du premier capteur d'accélération (31) et du deuxième capteur d'accélération (32) est disposé à gauche du centre de gravité (CG) du véhicule à selle (1) par rapport à une direction droite-gauche de véhicule, et l'autre du premier capteur d'accélération (31) et du deuxième capteur d'accélération (32) est disposé à droite du centre de gravité (CG) du véhicule à selle (1) par rapport à la direction droite-gauche de véhicule.

3. Le véhicule à selle (1) selon la revendication 1 ou 2, **caractérisé en ce que** le premier capteur d'accélération (31) est disposé au-dessus du centre de gravité (CG) du véhicule à selle (1) par rapport à une direction haut-bas de véhicule.

4. Le véhicule à selle (1) selon la revendication 1 ou 2, **caractérisé en ce que** le premier capteur d'accélération (31) est disposé au-dessous du centre de gravité (CG) du véhicule à selle (1) par rapport à une direction haut-bas de véhicule.
